# FASCICULE DE BREVET EUROPEEN

(11) **EP 1 814 687 B1**
(45) Date de publication et mention de la délivrance du brevet: **11.04.2012**
(21) Numéro de dépôt: 05817452.5
(22) Date de dépôt: 14.11.2005
(51) Int. Cl.: B23K 33/00, B23K 15/02, H01R 4/02

(54) **PROCEDE DE SOUDURE LASER SANS APPORT DE MATIERE ET DISPOSITIF ELECTRIQUE SUSCEPTIBLE D'ETRE REALISE PAR CE PROCEDE**
VERFAHREN ZUM LASERSCHWEISSEN OHNE MATERIALZUSATZ UND UNTER VERWENDUNG DES VERFAHRENS HERGESTELLTE ELEKTRISCHE VORRICHTUNG
METHOD FOR LASER WELDING WITHOUT ADDITION OF MATERIAL, AND ELECTRICAL DEVICE FORMED USING SAID METHOD

(30) Priorité: 15.11.2004 FR 0412079
(43) Date de publication de la demande: 08.08.2007
(73) Titulaire: Valeo Electronique et Systèmes de Liaison, 78180 Montigny-le-Bretonneux (FR)
(72) Inventeur: GASQUET, Jean-Claude, F-89100 Saint-Clément (FR); MORELLE, Jean-Michel, F-45190 Beaugency (FR); TANGHE, Alcina, F-77000 Melun (FR); VIVET, Laurent, F-78390 Bois d'Arcy (FR); TORCHEUX, Bertrand, F-78850 Thiverval Graignon (FR)
(86) Numéro de dépôt international: PCT/FR2005/002818
(87) Numéro de publication internationale: WO 2006/051225

(56) Documents cités:
- EP-A- 0 393 762
- EP-A- 1 400 303
- EP-A2- 1 574 278
- DE-A1- 19 623 103
- FR-A1- 2 732 630
- PATENT ABSTRACTS OF JAPAN vol. 1996, no. 06, 28 juin 1996 (1996-06-28) -& JP 08 045638 A (MATSUSHITA ELECTRIC WORKS LTD), 16 février 1996 (1996-02-16)
- PATENT ABSTRACTS OF JAPAN vol. 1996, no. 05, 31 mai 1996 (1996-05-31) -& JP 08 001362 A (MUTSUURA KOGYO KK), 9 janvier 1996 (1996-01-09)
- PATENT ABSTRACTS OF JAPAN vol. 018, no. 641 (E-1639), 6 décembre 1994 (1994-12-06) -& JP 06 251675 A (NEC KANSAI LTD), 9 septembre 1994 (1994-09-09)
- PATENT ABSTRACTS OF JAPAN vol. 004, no. 080 (M-015), 10 juin 1980 (1980-06-10) -& JP 55 040069 A (MATSUSHITA ELECTRIC IND CO LTD), 21 mars 1980 (1980-03-21)

## Description

La présente invention concerne un procédé de soudure sans apport de matière et un dispositif électrique susceptible d'être réalisé par ce procédé conformément au préambule des revendications 1 et 16 respectivement (voir, par exemple, EP 1 400-03).

Elle s'applique en particulier à la connexion d'un composant électrique, muni d'au moins une broche de raccordement électrique, avec un substrat.

On connaît déjà dans l'état de la technique, notamment d'après EP-A-1 400 303, un procédé de soudure sans apport de matière destiné à relier entre eux des premier et second éléments métalliques, le premier élément formant un support ou étant destiné à être rapporté sur un support, du type dans lequel:
- on forme dans le premier élément une partie de soudage munie d'une extrémité de liaison avec une partie de support du premier élément, et
- on dirige sur la partie de soudage du premier élément un faisceau énergétique de façon à provoquer la fusion d'une partie au moins de la masse de ce premier élément, la masse fondue venant en contact avec le second élément par effondrement de cette masse.

Dans le document EP-A-1 400 303, le premier élément est formé par une plaque et le second élément est formé par une tige. Un crevé ménagé dans la plaque délimite des languettes saillantes. Chaque languette, formant une partie de soudage, est reliée par un pli au reste de la plaque, formant une partie de support. Par ailleurs, chaque languette a une forme générale triangulaire délimitée par le pli et deux bords libres adjacents.

La tige est destinée à être emboîtée dans le crevé pour, tout en pliant les languettes perpendiculairement à la plaque, assurer un contact précis avec ces languettes. Après emboîtement de la tige, chaque languette comprend une surface interne de contact avec la tige et une surface externe opposée à la surface interne.

Le document EP-A-1 400 303 propose de provoquer la fusion de chaque languette au moyen d'un faisceau énergétique de type laser. A cet effet, on dirige l'axe du faisceau laser vers la surface externe des languettes.

Or, compte tenu des imprécisions de positionnement du point de focalisation du faisceau laser, une partie plus ou moins importante de l'énergie de ce faisceau est susceptible d'être transmise à la tige.

Le procédé de soudure décrit dans le document ci-dessus n'apparaît pas adapté pour relier entre eux une broche (formant une tige souple) de raccordement électrique d'un composant électrique et un substrat métallique (formant une plaque).

En effet, la broche souple du composant électrique n'est pas assez rigide pour plier les languettes formées par le crevé ménagé dans le substrat. Il n'est donc pas possible d'obtenir un contact précis entre les languettes et la broche du composant électrique, en emboîtant la broche (souple) du composant électrique dans un crevé du substrat, comme 5proposé dans EP-A-1 400 303.

De plus, les aléas de positionnement du point de focalisation du faisceau laser sont susceptibles de provoquer une transmission excessive d'énergie à la broche du composant électrique et de détruire cette broche.

L'invention a notamment pour but de relier électriquement et mécaniquement les 10broches d'un composant électrique à un substrat métallique à l'aide d'un procédé de soudure sans apport de matière, du type précité.

A cet effet, l'invention a pour objet un procédé de soudure sans apport de matière destiné à reller entre eux des premier et second éléments métalliques, conforme à la revendication 1.

Grâce à l'orientation particulière du faisceau énergétique proposé par l'invention, le second élément, formant par exemple une broche de composant électrique, ne reçoit pas une quantité excessive d'énergie provenant du faisceau. En effet, l'essentiel de l'énergie du faisceau est absorbée par la partie de soudage du premier élément.

Par ailleurs, le positionnement relatif des premier et second éléments peut être relativement grossier, l'effondrement de la masse fondue du premier élément permettant de combler, le cas échéant, l'espace entre les premier et second éléments.

Enfin, les aléas de positionnement du point de focalisation du faisceau énergétique ne conduisent pas à une exposition indésirable du second élément au faisceau. En effet, malgré ces aléas, le point de focalisation reste situé dans la masse de la partie de soudage du premier élément, entre la face d'extrémité libre et l'extrémité de liaison de cette partie de soudage.

Suivant d'autres caractéristiques optionnelles de ce procédé de soudure :
- la partie de soudage est reliée à la partie de support par un pli formant l'extrémité de liaison de cette partie de soudage, la face d'extrémité libre étant sensiblement parallèle au pli ;
- l'angle entre l'axe du faisceau énergétique et la face d'extrémité libre est sensiblement égal à 90° ;
- l'angle entre l'axe du faisceau énergétique et la face d'extrémité libre est supérieur à 90°, de façon à réfléchir une partie du faisceau vers le second élément ;
- le faisceau énergétique est un faisceau laser ;
- le faisceau laser est émis par une source d'impulsions, la durée des impulsions étant de préférence comprise entre 2 et 20 ms ;
- le faisceau énergétique est un faisceau d'électrons émis sous vide ;
- on rapporte la partie de support du premier élément sur un substrat, de préférence avant de rapporter ce premier élément au second élément ;
- le substrat comportant un revêtement métallique, on rapporte la partie de support du premier élément sur le substrat par brasage sur le revêtement métallique de ce substrat ;
- la partie de support du premier élément a une forme générale de pontet comportant deux extrémités opposées rapportées sur le substrat ;
- la partie de soudage est formée par un crevé ménagé dans la partie du support, entre les deux extrémités de cette partie de support ;
- le premier élément forme une patte venue de matière avec un support portant au moins le second élément ;
- le second élément forme une broche de raccordement électrique d'un composant électrique, par exemple un composant de type traversant ;
- la face d'extrémité libre a une forme générale rectangulaire délimitée par deux bords opposés, respectivement proche et éloigné du second élément, la distance entre ces deux bords étant comprise entre 0,2 et 1 mm ;
- les deux bords opposés proche et éloigné sont sensiblement parallèles au pli. L'invention a également pour objet un dispositif électrique conforme à la revendication 6.

L'invention sera mieux comprise à la lecture de la description qui va suivre, donnée uniquement à titre d'exemple et faite en se référant aux dessins annexés dans lesquels :
- la figure 1 est une vue en coupe axiale d'un dispositif électrique selon un premier mode de réalisation de l'invention, en cours de fabrication, avant la formation de la soudure reliant les premier et second éléments métalliques entre eux ;
- la figure 2 est une vue similaire à la figure 1, montrant la soudure reliant les premier et second éléments métalliques entre eux ;
- les figures 3 et 4 sont des vues similaires aux figures 1 et 2 montrant un dispositif électrique selon un second mode de réalisation de l'invention ;
- la figure 5 est une vue en perspective d'un dispositif électrique selon un troisième mode de réalisation de l'invention, en cours de fabrication, avant la formation de la soudure reliant les premier et second éléments métalliques entre eux ;
- la figure 6 est une vue similaire à la figure 1 montrant un dispositif électrique selon un quatrième mode de réalisation de l'invention ;
- les figures 7 et 8 sont des vues, respectivement en coupe axiale et en perspective, montrant un dispositif électrique selon un cinquième mode de réalisation de l'invention ;
- la figure 9 est une vue en perspective d'un dispositif électrique selon un sixième mode de réalisation de l'invention, en cours de fabrication, avant la formation de la soudure reliant les premier et second éléments métalliques entre eux ; et
- les figures 10 à 13 sont des vues similaires à la figure 9 montrant un dispositif électrique selon respectivement des septième, huitième, neuvième et dixième modes de réalisation de l'invention.

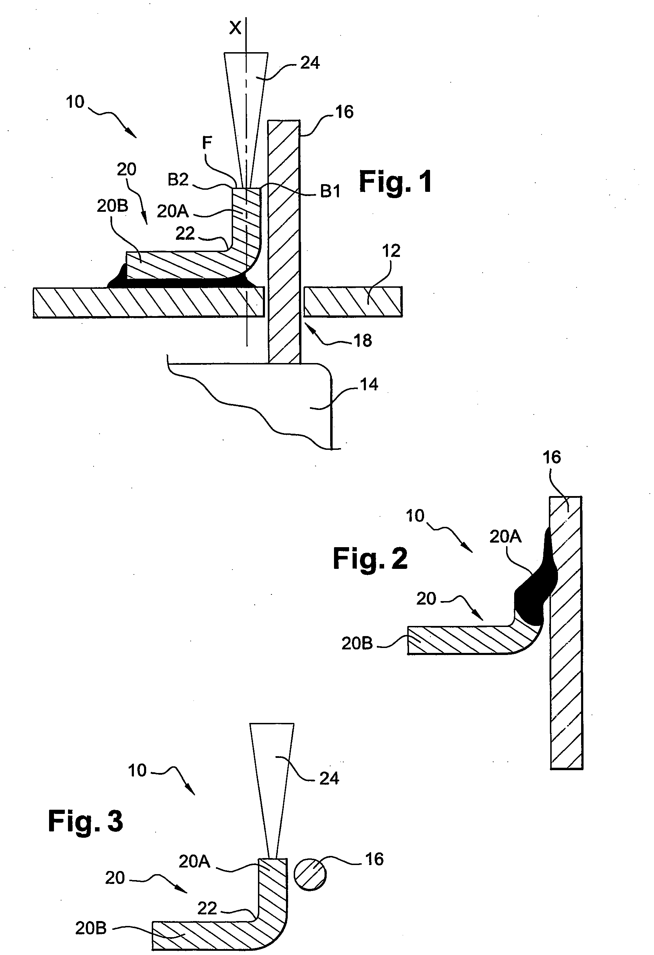

On a représenté sur la figure 1 un dispositif électrique selon un premier mode de réalisation de l'invention désigné par la référence générale 10.

Le dispositif 10 comprend un substrat 12 muni d'un revêtement métallique classique (non représenté) formant conducteur électrique.

Le dispositif électrique 10 comprend également un composant électrique 14 muni d'au moins une broche métallique 16 de raccordement électrique au substrat 12.

Dans l'exemple décrit, le composant électrique 14 est de type traversant. En effet, la broche 16 s'étend à travers un perçage 18 du substrat 12.

Le composant électrique 14 est raccordé électriquement et mécaniquement au substrat 12 au moyen d'un élément métallique 20 muni d'une première partie 20A, destinée à être soudée sur la broche 16, et d'une seconde partie 20B rapportée sur le revêtement métallique du substrat 12, par exemple par brasage. L'élément 20 est formé, par exemple, par pliage d'une tige métallique de section rectangulaire.

Dans l'exemple illustré, la partie de soudage 20A fait un angle d'environ 90° avec la partie de support 20B.

La partie de soudage 20A est reliée à la partie de support 20B par un pli 22 formant une extrémité de liaison de la partie de soudage 20A avec la partie de support 20B.

Avant ou après pliage de l'élément 20, on forme dans la partie de soudage 20A de cet élément 20 une face d'extrémité libre F, opposée au pli 22 formant l'extrémité de liaison de la partie de soudage 20A.

Dans l'exemple décrit, la face d'extrémité libre F a une forme générale rectangulaire délimitée par deux bords opposés, respectivement proche B1 et éloigné B2 de la broche 16. On notera que les deux bords B1, B2 sont sensiblement parallèles au pli 22.

De préférence, la distance entre les deux bords B1, B2 est comprise entre 0,2 et 1 mm.

Dans le dispositif 10 selon le premier mode de réalisation de l'invention, la broche 16 et la partie de soudage 20A de l'élément 20 s'étendent sensiblement parallèlement entre eux.

Pour souder la partie de soudage 20A de l'élément 20 sur la broche 16, on procède de la façon suivante.

Après avoir mis en forme l'élément 20 comme représenté sur la figure 1 et décrit ci-dessus, on rapporte, par brasage, la partie de support 20B de l'élément 20 sur le revêtement métallique du substrat 12.

Puis, on positionne la broche 16 à travers le perçage 18 de façon que cette broche 16 s'étende à proximité, voire au contact, de la partie de soudage 20A de l'élément 20.

On soude alors, sans apport de matière, la partie de soudage 20A de l'élément 20 sur la broche 16 au moyen d'un faisceau énergétique 24, de préférence un faisceau laser. En variante, le faisceau énergétique pourrait être un faisceau d'électrons émis sous vide.

Comme cela est représenté sur la figure 1, on dirige le faisceau énergétique 24 sur la partie de soudage 20A de l'élément 20 de façon que l'axe X du faisceau 24 traverse la partie de soudage 20A depuis la face d'extrémité libre F vers le pli 22 formant l'extrémité de liaison.

L'énergie transmise à la partie de soudage 20A par le faisceau 24 provoque la fusion, au moins partielle, de la masse de cette partie de soudage 20A.

La broche 16 et l'élément 20 sont positionnés l'un par rapport à l'autre de façon que la masse fondue vienne en contact avec la broche 16 par effondrement de cette masse (voir figure 2).

De préférence, le faisceau laser 24 est émis par une source d'impulsions telle que la durée des impulsions soit comprise entre 2 ms et 20 ms.

On pourra déterminer la hauteur de la partie de soudage 20A de l'élément 20 (dimension entre la face d'extrémité libre F et le pli 22) par essais successifs de façon à obtenir une profondeur satisfaisante de pénétration dans l'élément 20 de l'énergie du faisceau et un volume approprié de masse fondue de l'élément 20.

Conformément à l'invention la température de fusion de la partie de soudage 20A est supérieure à celle de la broche 16 de manière à permettre une fusion adéquate de la surface de la broche 16 par contact avec la masse fondue de la partie de soudage 20A de l'élément 20.

Dans le dispositif 10 selon le premier mode de réalisation de l'invention, l'angle entre l'axe X du faisceau 24 et la face d'extrémité libre F est sensiblement égal à 90°. Une partie du rayonnement du faisceau 24 est donc renvoyée vers la source de ce faisceau 24 et traitée par des moyens connus en soi.

En variante, le brasage de la partie de support 20B de l'élément 20 sur le revêtement métallique du substrat 12 pourrait être effectué après réalisation de la soudure de la partie de soudage 20A de l'élément 20 avec la broche 16.

Sur les figures 3 à 13, on a représenté un dispositif électrique 10 selon des deuxième à dixième modes de réalisation de l'invention. Sur ces figures les éléments analogues à ceux des figures précédentes sont désignés par des références identiques.

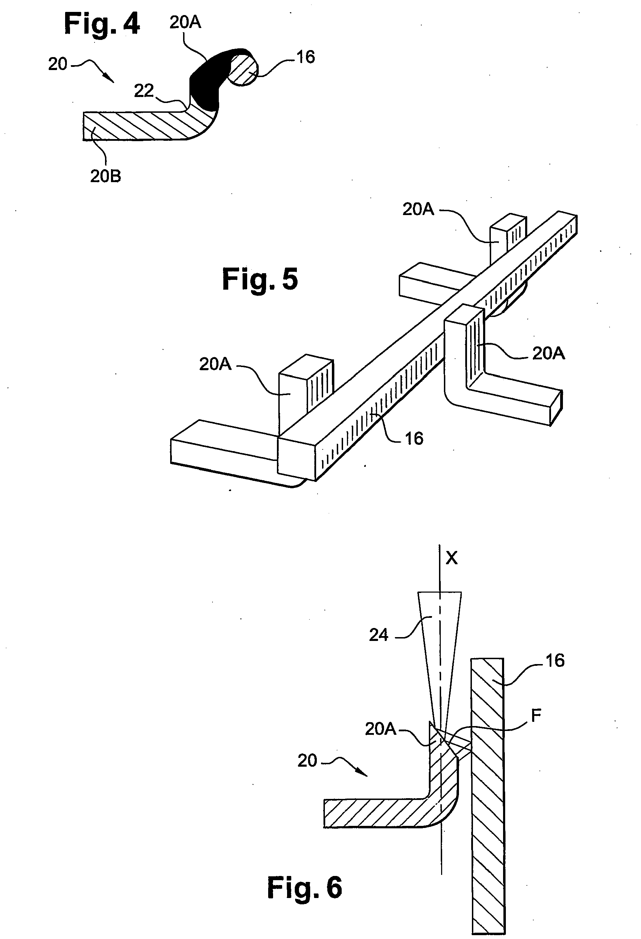

Dans le deuxième mode de réalisation de l'invention, représenté sur les figures 3 et 4, la broche 16 et la partie de soudage 20A sont sensiblement orthogonales.

Le dispositif électrique 10 selon le troisième mode de réalisation de l'invention représenté sur la figure 5 se distingue du précédent en ce qu'il comprend plusieurs éléments 20A destinés à être reliés à la broche 16 à l'aide des moyens et procédé décrits précédemment.

Dans le quatrième mode de réalisation représenté sur la figure 6, la partie de soudage 20A de l'élément 20 est biseautée de façon que l'angle entre l'axe X du faisceau 24 et la face d'extrémité libre F soit supérieur à 90°. Une partie du faisceau 24 est ainsi réfléchie, de façon diffuse, vers la broche 16. Dans ce cas, des réflexions multiples s'établissent entre la broche 16 et la partie de soudage 20A de l'élément 20, autorisant un chauffage sans excès de la surface de la broche 16. Le chauffage de la surface de la broche 16 optimise la mouillabilité de cette surface et le contact de la masse fondue de l'élément 20 avec la broche 16.

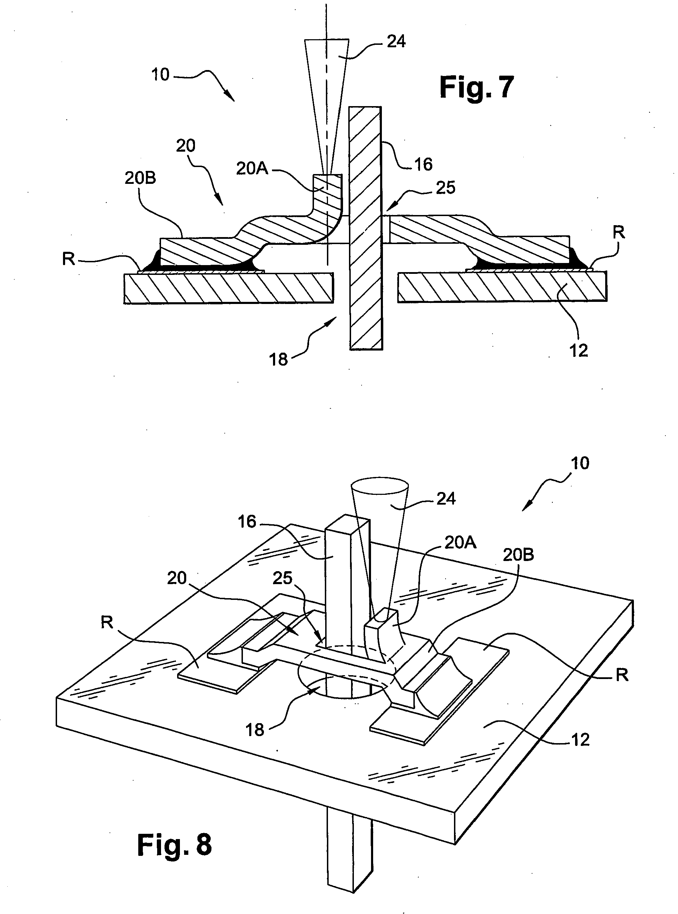

Le dispositif électrique 10 selon le cinquième mode de réalisation de l'invention représenté sur les figures 7 et 8 se distingue du dispositif électrique représenté sur les figures précédentes en ce que l'élément métallique 20 est obtenu par pliage et perçage d'une plaque.

La partie de support 20B de l'élément métallique 20 a une forme générale de pontet comprenant deux extrémités opposées formant pattes rapportées chacune sur une partie R du revêtement métallique du substrat 12 par brasage.

Un crevé ménagé dans la partie 20B (entre les deux extrémités brasées de celle-ci) forme, d'une part, une patte correspondant à la partie de soudage 20A, et d'autre part, un perçage 25 de l'élément 20. La broche 16 s'étend à travers le perçage 18 du substrat 12 et à travers le perçage 25 de l'élément 20.

Avantageusement, l'élément métallique 20 peut être rapporté sur le substrat 12 conformément aux procédés classiques de montage en surface et en même temps que d'autres composants montés en surface.

On notera que la forme en pontet de la partie de support 20B assure à l'élément métallique 20 un positionnement stable sur le substrat 12 avant et pendant le brasage sur le revêtement métallique.

On notera de plus que le perçage 18 du substrat 12 peut être de dimension relativement grande, la position de ce perçage 18 dans le substrat 12 pouvant être relativement imprécise sans pour autant nuire à la précision du positionnement de la broche 16 par rapport à la partie de soudage 20A.

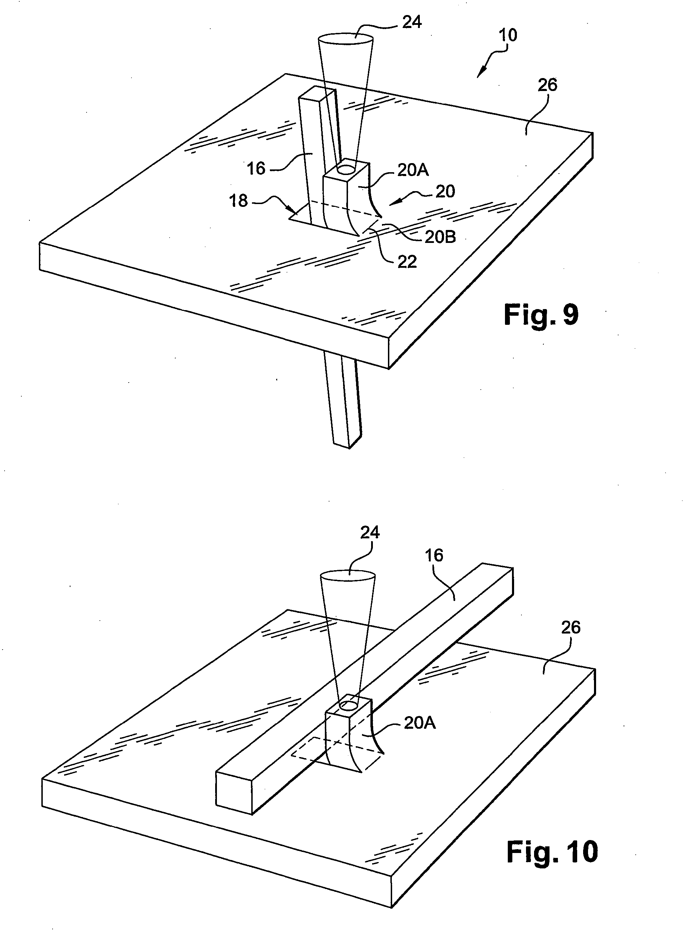

Dans les cinquième à neuvième modes de réalisation de l'invention, représentés sur les figures 9 à 13, plutôt que d'être rapporté sur un substrat 12 comme c'est le cas dans les modes de réalisations précédents, l'élément 20 forme une patte venue de matière avec un support 26 portant au moins la broche 16. Le support 26 est par exemple une plaque conductrice en cuivre.

Ainsi, dans le sixième mode réalisation de l'invention, représenté sur la figure 9, le perçage 18 et la patte 20 sont formés par un crevé ménagé dans le support 26. La broche 16 s'étend à travers le perçage 18.

Le dispositif électrique 10 selon le septième mode de réalisation de l'invention représenté sur la figure 10 se distingue du précédent en ce que la broche 16 et la partie de soudage 20A sont sensiblement orthogonales.

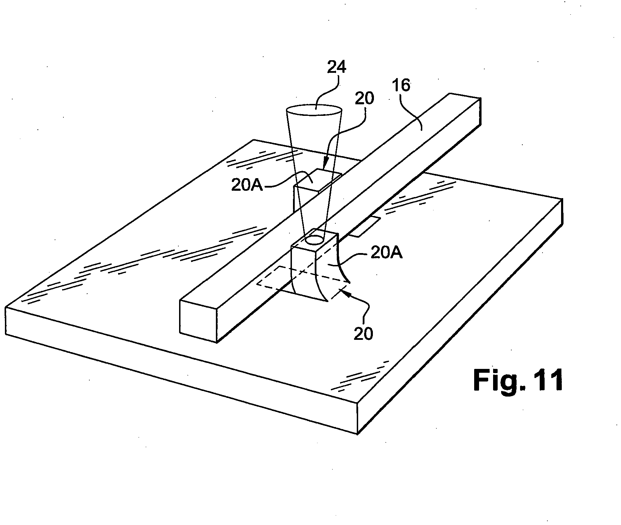

Le dispositif électrique 10 selon le huitième mode de réalisation de l'invention représenté sur la figure 11 se distingue du précédent en ce qu'il comprend deux éléments 20 destinés à être reliés à la broche 16. Les deux éléments 20 sont décalés entre eux transversalement de part et d'autre de la broche 16, et longitudinalement le long de la broche 16.

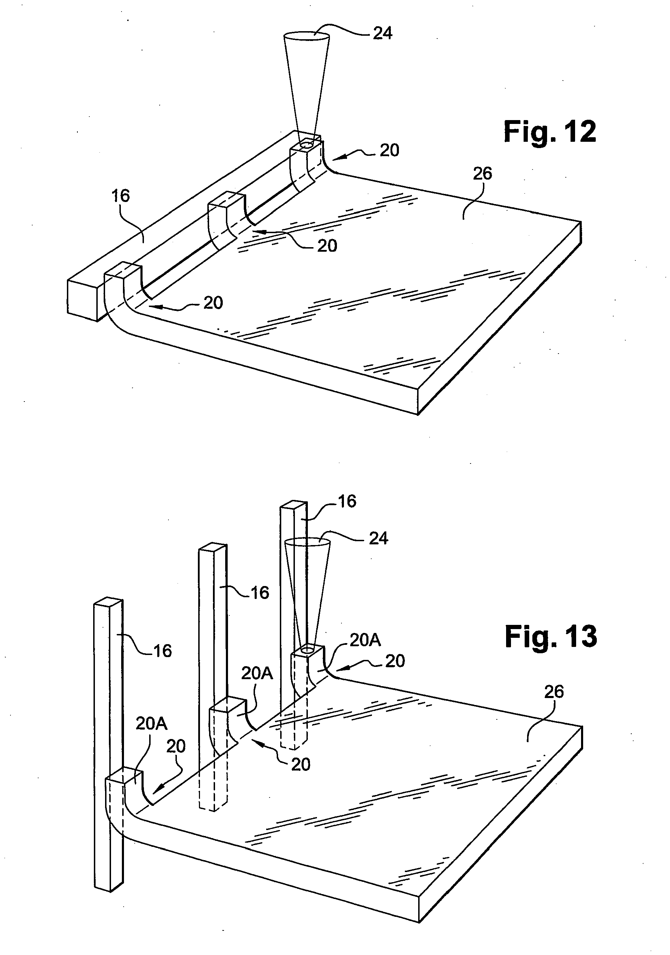

Dans le neuvième mode de réalisation de l'invention, représenté sur la figure 12, le dispositif 10 comprend plusieurs éléments 20 destinés à être reliés à la broche 16, orthogonale à ces éléments 20. Contrairement aux trois modes de réalisations précédents, les éléments 20 sont obtenus par mise en forme, par exemple découpage et pliage, d'un bord du support 26, de manière à relier la broche 16 au bord de ce support 26.

Le dispositif électrique 10 selon le dixième mode de réalisation de l'invention représenté sur la figure 13 se distingue du précédent en ce que chaque partie de soudage 20A est destinée à être reliée à une broche 16 correspondante, sensiblement parallèle à cette partie de soudage 20A.

L'invention ne se limite pas aux modes de réalisation décrits ci-dessus.

En particulier, la partie de soudage 20A de l'élément 20 peut avoir une dimension relativement importante parallèlement au pli 22, de façon que plusieurs broches puissent être reliées à la partie de soudage 20A, chacune par une soudure correspondante.

Parmi les avantages de l'invention, on notera que la soudure sans apport de matière réalisée conformément au procédé de l'invention permet de relier électriquement, mécaniquement et/ou thermiquement des premier et second éléments métalliques.

Par ailleurs, la partie de soudage 20A de l'élément 20 et la broche 16 peuvent être soit parallèles soit orthogonales entre elles.

## Revendications

1. Procédé de soudure sans apport de matière destiné à relier entre eux des premier (20) et second (16) éléments métalliques, le premier élément (20) formant un support (26) ou étant destiné à être rapporté sur un support (26), du type dans lequel :
- on forme dans le premier élément (20) une partie de soudage (20A) munie d'une extrémité de liaison (22) avec une partie (20B) de support du premier élément (20), et
- on dirige sur la partie de soudage (20A) du premier élément (20) un faisceau énergétique (24) de façon à provoquer la fusion d'une partie au moins de la masse de ce premier élément (20), la masse fondue venant en contact avec le second élément (16) par effondrement de cette masse,
**caractérisé en ce que** :
- on forme dans la partie de soudage (20A) du premier élément (20) une face (F) d'extrémité libre, opposée à l'extrémité de liaison (22), et
- on dirige le faisceau énergétique (24) sur la partie de soudage (20A) de façon que l'axe (X) du faisceau (24) traverse la partie de soudage (20A) depuis la face d'extrémité libre (F) vers l'extrémité de liaison (22) - La température de fusion de la partie de soudage (20A) est supérieure à celle du second élément (16) de manière à permettre une fusion adéquate de la surface du second élément (16) par contact avec la masse fondue de la partie de soudage (20A)

2. Procédé selon la revendication 1, dans lequel la partie de soudage (20A) est reliée à la partie de support (20B) par un pli (22) formant l'extrémité de liaison de cette partie de soudage (20A), la face d'extrémité libre (F) étant sensiblement parallèle au pli (22).

3. Procédé selon la revendication 1 ou 2, dans lequel l'angle entre l'axe (X) du faisceau énergétique (24) el la face d'extrémité libre (F) est sensiblement égal à 90°.

4. Procédé selon la revendication 1 ou 2, dans lequel l'angle entre l'axe (X) du faisceau énergétique (24) et la face d'extrémité libre (F) est supérieur à 90°, de façon à réfléchir une partie du faisceau (24) vers le second élément (16).

5. Procédé selon l'une quelconque des revendications 1 ou 4, dans lequel le faisceau énergétique (24) est un faisceau laser.

6. Procédé selon la revendication 5, dans lequel le faisceau laser (24) est émis par une source d'impulsions, la durée des impulsions étant de préférence comprise entre 2 et 20 ms.

7. Procédé selon l'une quelconque des revendications 1 ou 4, dans lequel le faisceau énergétique (24) est un faisceau d'électrons émis sous vide.

8. Procédé selon l'une quelconque des revendications 1 à 7, dans lequel on rapporte la partie de support (20B) du premier élément (20) sur un substrat (12), de préférence avant de rapporter ce premier élément (20) au second élément (16).

9. Procédé selon la revendication 8, dans lequel, le substrat (12) comportant un revêtement métallique, on rapporte la partie de support (20B) du premier élément (20) sur le substrat (12) par brasage sur le revêtement métallique de ce substrat.

10. Procédé selon la revendication 8 ou 9, dans lequel la partie de support (20B) du premier élément (20) a une forme générale de pontet comportant deux extrémités opposées rapportées sur le substrat (12).

11. Procédé selon la revendication 10, dans lequel la partie de soudage (20A) est formée par un crevé ménagé dans la partie de support (20B), entre les deux extrémités de cette partie de support (20B).

12. Procédé selon l'une quelconque des revendications 1 à 7, dans lequel le premier élément (20) forme une patte venue de matière avec un support (26) portant au moins le second élément (16).

13. Procédé selon l'une quelconque des revendications précédentes, dans lequel le second élément (16) forme une broche de raccordement électrique d'un composant électrique (14), par exemple un composant de type traversant.

14. Procédé selon l'une quelconque des revendications précédentes, dans lequel la face d'extrémité libre (F) a une forme générale rectangulaire délimitée par deux bords opposés, respectivement proche (B1) et éloigné (B2) du second élément (16), la distance entre ces deux bords (B1, B2) étant comprise entre 0,2 et 1 mm.

15. Procédé selon les revendications 2 et 14 prises ensemble, dans lequel les deux bords opposées proche (B1) et éloigné (B2) sont sensiblement parallèles au pli (22).

16. Dispositif électrique du type comprenant un substrat (12), formant conducteur électrique, et un composant électrique (14) muni d'au moins une broche (16) de raccordement électrique au substrat, **caractérisé en ce qu'**il comprend un élément (20) muni d'une première partie soudée (20A) sur la broche et d'une seconde partie (20B) rapportée, par exemple par brasage, sur le substrat (12), la première partie (20A) de l'élément (20) présentant une température de fusion supérieure à celle de la broche (16).

## Claims

1. Method for welding with no filler material, said method being intended to join a first metal element (20) and a second metal element (16) to each other, the first element (20) forming a support (26) or being intended to be joined to a support (26), of the type in which:
- a welding part (20A) is formed in the first element (20), this part having an end (22) for fastening to a supporting part (20B) of the first element (20); and
- an energy beam (24) is directed onto the welding part (20A) of the first element (20) so as to cause at least part of the mass of this first element (20) to melt, the molten mass collapsing and making contact with the second clement (16),
**characterized in that:**
- a free-end face (F) is formed in the welding part (20A) of the first element (20) opposite the fastening end (22);
- the energy beam (24) is directed onto the welding part (20A) so that the axis (X) of the beam (24) passes through the welding part (20A) from the free-end face (F) to the fastening end (22); and
- the melting point of the welding part (20A) is higher than that of the second element (16) so that the surface of the second element (16) is adequately melted on contact with the molten mass of the welding part (20A).

2. Method according to Claim 1, in which the welding part (20A) is connected to the supporting part (20B) by a fold (22) forming the fastening end of this welding part (20A), the free-end face (F) being substantially parallel to the fold (22).

3. Method according to Claim 1 or 2, in which the angle between Lhe axis (X) of the energy beam (24) and the free-end face (F) is substantially equal to 90°.

4. Method according to Claim 1 or 2, in which the angle between the axis (X) of the energy beam (24) and the free-end face (F) is larger than 90°, so that part of the beam (24) is reflected towards the second element (16).

5. Method according to either of Claims 1 and 4, in which the energy beam (24) is a laser beam.

6. Method according to Claim 5, in which the laser beam (24) is emitted by a pulsed source, the duration of the pulses preferably being between 2 and 20 ms.

7. Method according to either of Claims 1 and 4, in which the energy beam (24) is an electron beam emitted under vacuum.

8. Method according to any one of Claims 1 to 7, in which the supporting part (20B) of the first element (20) is joined to a plate (12), preferably before this first element (20) is joined to the second element (16).

9. Method according to Claim 8, in which the plate (12) comprises a metal coating and the supporting part (20B) of the first element (20) is joined by brazing to the plate (12) on the metal coating of this plate.

10. Method according to Claim 8 or 9, in which the supporting part (20B) of the first element (20) takes the general form of a bridge comprising two opposite ends joined to the plate (12).

11. Method according to Claim 10, in which the welding part (20A) is formed by a lancing made in the supporting part (20B), between the two ends of this supporting part (20B).

12. Method according to any one of Claims 1 to 7, in which the first element (20) forms a made as one piece with a support (26) bearing at least the second element (16).

13. Method according to any one of the preceding claims, in which the second element (16) forms an electrical connection pin of an electrical component (14), for example a component of the through-hole type.

14. Method according to any one of the preceding claims, in which the free-end face (F) has a generally rectangular shape bounded by two opposite edges, one (B1) near to and the other (B2) far from the second element (16), the distance between these two edges (B1, B2) being between 0.2 and 1 mm.

15. Method according to Claims 2 and 14 combined, in which the two opposite edges, the near edge (B1) and the far edge (B2), are substantially parallel to the fold (22).

16. Electrical device of the type comprising a plate (12), forming an electrical conductor, and an electrical component (14) equipped with at least one pin (16) for electrical connection to the plate, **characterized in that** it comprises an element (20) equipped with a first part (20A) welded to the pin and a second part (20B) joined, for example brazed, to the plate (12), the first part (20A) of the element (20) having a higher melting point than that of the pin (16).

## Patentansprüche

1. Schweißverfahren ohne Werkstoffzuführung, das dazu bestimmt ist, ein erstes (20) und ein zweites (16) Metallteil miteinander zu verbinden, wobei das erste Teil (20) einen Träger (26) bildet oder dazu bestimmt ist, auf einem Träger (26) angeschweißt zu werden, derart, dass:
- im ersten Teil (20) ein Schweißabschnitt (20A) gebildet wird, der mit einem Ende (22) zur Verbindung mit einem Trägerabschnitt (20B) des ersten Teils (20) versehen ist, und
- auf den Schweißabschnitt (20A) des ersten Teils (20) ein Energiestrahl (24) gerichtet wird, derart, dass das Schmelzen von mindestens einem Abschnitt der Masse dieses ersten Teils (20) bewirkt wird, wobei die geschmolzene Masse durch Aufschmelzung dieser Masse mit dem zweiten Teil (16) in Berührung gelangt,
**dadurch gekennzeichnet, dass**:
- in dem Schweißabschnitt (20A) des ersten Teils (20) eine freie Endfläche (F) gebildet wird, die dem Verbindungsende (22) entgegengesetzt ist,
- der Energiestrahl (24) derart auf den Schweißabschnitt (20A) gerichtet wird, dass die Achse (X) des Strahls (24) den Schweißabschnitt (20A) von der freien Endfläche (F) in Richtung des Verbindungsendes (22) durchquert, und
- wobei die Schmelztemperatur des Schweißabschnitts (20A) höher ist als diejenige des zweiten Teils (16), derart, dass ein zweckmäßiges Schmelzen der Fläche des zweiten Teils (16) durch Berührung mit der geschmolzenen Masse des Schweißabschnitts (20A) ermöglicht wird.

2. Verfahren nach Anspruch 1, wobei der Schweißabschnitt (20A) über eine Falte (22), die das Verbindungsende dieses Schweißabschnitts (20A) bildet, mit dem Trägerabschnitt (20B) verbunden ist, wobei die freie Endfläche (F) im Wesentlichen parallel zur Falte (22) ist.

3. Verfahren nach Anspruch 1 oder 2, wobei der Winkel zwischen der Achse (X) des Energiestrahls (24) und der freien Endfläche (F) im Wesentlichen 90° beträgt.

4. Verfahren nach Anspruch 1 oder 2, wobei der Winkel zwischen der Achse (X) des Energiestrahls (24) und der freien Endfläche (F) größer als 90° ist, derart, dass ein Teil des Strahls (24) in Richtung des zweiten Teils (16) reflektiert wird.

5. Verfahren nach einem der Ansprüche 1 oder 4, wobei der Energiestrahl (24) ein Laserstrahl ist.

6. Verfahren nach Anspruch 5, wobei der Laserstrahl (24) durch eine Impulsquelle ausgestrahlt wird, wobei die Dauer der Impulse vorzugsweise zwischen 2 und 20 ms enthalten ist.

7. Verfahren nach einem der Ansprüche 1 oder 4, wobei der Energiestrahl (24) ein im Vakuum ausgestrahlter Elektronenstrahl ist.

8. Verfahren nach einem der Ansprüche 1 bis 7, wobei der Trägerabschnitt (20B) des ersten Teils (20) auf einem Substrat (12), vorzugsweise vor dem Anschweißen dieses ersten Teils (20) an dem zweiten Teil (16), angeschweißt wird.

9. Verfahren nach Anspruch 8, wobei, da das Substrat (12) einen metallischen Überzug aufweist, der Trägerabschnitt (20B) des ersten Teils (20) durch Löten auf dem metallischen Überzug dieses Substrats auf dem Substrat (12) angeschweißt wird.

10. Verfahren nach Anspruch 8 oder 9, wobei der Trägerabschnitt (20B) des ersten Teils (20) die allgemeine Form eines Stegs aufweist, der zwei entgegengesetzte Enden aufweist, die auf dem Substrat (12) angeschweißt werden.

11. Verfahren nach Anspruch 10, wobei der Schweißabschnitt (20A) durch einen Kragen gebildet ist, der im Trägerabschnitt (20B) zwischen den zwei Enden dieses Trägerabschnitts (20B) eingerichtet ist.

12. Verfahren nach einem der Ansprüche 1 bis 7, wobei das erste Teil (20) eine Lasche bildet, die mit einem Träger (26) stoffschlüssig ist, der mindestens das zweite Teil (16) trägt.

13. Verfahren nach einem der vorhergehenden Ansprüche, wobei das zweite Teil (16) einen Stift für den elektrischen Anschluss eines elektrischen Bauelements (14), zum Beispiel eines Bauelements des durchgehenden Typs, bildet.

14. Verfahren nach einem der vorhergehenden Ansprüche, wobei die freie Endfläche (F) eine allgemein rechteckige Form aufweist, die durch zwei entgegengesetzte Ränder abgegrenzt ist, die sich nahe (B1) am beziehungsweise entfernt (B2) vom zweiten Teil (16) befinden, wobei die Entfernung zwischen diesen zwei Rädern (131, B2) zwischen 0,2 und 1 mm enthalten ist.

15. Verfahren nach Anspruch 2 und 14 in Kombination, wobei die zwei entgegengesetzten nahen (B1) und entfernten (B2) Ränder im Wesentlichen parallel zur Falte (22) sind.

16. Elektrische Vorrichtung des Typs, der ein Substrat (12), der einen elektrischen Leiter bildet, und ein elektrisches Bauelement (14) aufweist, das mit mindestens einem Stift (16) zum elektrischen Anschluss an das Substrat versehen ist, **dadurch gekennzeichnet, dass** sie ein Teil (20) aufweist, das mit einem ersten Abschnitt (20A), das auf den Stift geschweißt wird, und einem zweiten Abschnitt (20B) versehen ist, der, zum Beispiel durch Löten, auf dem Substrat (12) angeschweißt wird, wobei der erste Abschnitt (20A) des Teils (20) eine Schmelztemperatur aufweist, die höher ist als diejenige des Stifts (16).
